# EUROPÄISCHE PATENTSCHRIFT

(11) **EP 1 520 747 B1**
(45) Veröffentlichungstag und Bekanntmachung des Hinweises auf die Patenterteilung: **16.04.2008**
(21) Anmeldenummer: 04021885.1
(22) Anmeldetag: 15.09.2004
(51) Int. Cl.: B60M 1/28, G01C 15/00, G06T 7/00

(54) **Verfahren zur berührungslosen Messung von Winkeln und Abständen**
Non-contact method for measuring angles and distances
Procédé de mesure sans contact d' angles et de distances

(30) Priorität: 01.10.2003 DE 10345861
(43) Veröffentlichungstag der Anmeldung: 06.04.2005
(73) Patentinhaber: DB Netz AG, 60468 Frankfurt am Main (DE)
(72) Erfinder: Sarnes, Bernhard, Dr., 85774 Unterföhring (DE); Schüssler, Stefan, 83589 Pfaffing (DE); Hulin, Bernhard, 81245 München (DE)
(74) Vertreter: Zinken-Sommer, Rainer

(56) Entgegenhaltungen:
- WO-A-02/21445

## Beschreibung

Die Erfindung betrifft ein Verfahren zur berührungslosen Messung von Winkeln und/oder Abständen zwischen Strukturen eines Objektes. Dieses Verfahren wird insbesondere bei Schienenbahnen angewendet, bei denen elektrisch betriebene Fahrzeuge verkehren, die elektrische Energie aus einer Oberleitung beziehen.

Die zunehmende Auslastung des Fahrweges der Schienenbahnen bei steigenden Geschwindigkeiten stellt ständig wachsende Anforderungen auch an Oberleitungen. Dadurch treten vermehrt Schäden und wachsender Verschleiß an den Oberleitungen auf. Gemäß den Vorgaben der Deutschen Bahn AG, sind Bahnanlagen demzufolge planmäßig auf ihre ordnungsgemäße Beschaffenheit zu untersuchen.

Durch eine frühzeitige Erkennung von Schäden und rechtzeitige Ausbesserung sich entwickelnder Schäden und Verschleißerscheinungen können zudem gravierende Auswirkungen auf den Schienenverkehr verhindert werden. Hierbei ist auch der betriebswirtschaftliche Aspekt der optimalen Standzeiten der Oberleitungen zu beachten. Kernpunkte sind dabei Liegezeiten von Fahrdrähten sowie der Zustand von Quertrageinrichtungen und von Längskettenwerken. Voraussetzung für eine effiziente Planung von Reparaturen und Erneuerungen ist eine genaue und möglichst aktuelle Kenntnis eines Ist-Zustandes der Oberleitungen.

Eine überwiegend manuelle Messung und visuelle Prüfung zur Ermittlung eines Ist-Zustandes der Oberleitungen, wie sie derzeit größtenteils durchgeführt wird, ist dabei nicht wirtschaftlich. Sie ist kostenintensiv, vergleichsweise ungenau und erfordert zahlreiche Trassenbelegungen. Eine moderne Instandhaltung benötigt automatische Messsysteme, die eine automatische optische Inspektion ohne großen Zeit- und Personalaufwand ermöglichen.

Als Stand der Technik existieren bereits heute automatische Verfahren und Geräte zur Bestimmung des Verschleißes des Fahrdrahtes. So werden zur Ermittlung einer Höhen- und Seitenlage des Fahrdrahtes Triangulationsverfahren und lichtlaufzeitbasierte Phasenmessverfahren eingesetzt oder Videobilder von senkrecht nach oben blickenden Kameras mit einer von einer weiteren Kamera gemessenen Höhe einer Schleifleiste am Stromabnehmer eines Schienenfahrzeuhes kombiniert.

Sonstige Bestandteile des Längskettenwerkes und Quertrageinrichtungen wie Fahrleitungsstützpunkte werden bisher üblicherweise durch Bedienpersonal visuell kontrolliert. Hierbei befindet sich das Bedienpersonal in einem turmartigen Aufbau eines Inspektionswagens und beobachtet ständig die Oberleitung.

Desweiteren wird die Oberleitung auch mit Hilfe von Aufnahmen mit Videorekordern inspiziert, wobei deren relativ geringe Auflösung und Bildfrequenz nur sehr grobe Defekte erkennen lässt. Nach einer Inspektionsfahrt sind alle Videobilder von Bedienpersonal visuell zu kontrollieren und auszuwerten.

Nachteil dieser Verfahren ist vor allem ein hoher Aufwand von Bedienpersonal. Zudem ist eine monotone visuelle Inspektion für das Bedienpersonal sehr ermüdend und demzufolge mit einer vergleichsweise hohen Unsicherheit behaftet. Desweiteren sind lediglich qualitative und keine quantitativen Aussagen über den Zustand der Oberleitung möglich.

Aus DE 199 36 448 ist eine Vorrichtung zur automatischen Bildaufnahme und Auswertung bekannt, bei der sich auf dem Dach eines Inspektionsfahrzeuges mehrere optische Systeme befinden, die während der Fahrt berührungslos aus verschiedenen Richtungen Bilder aufnehmen und abspeichern, die das Längskettenwerk und Quertrageinrichtungen vollständig abdecken. Nach Ende der Messfahrt werden die gespeicherten Aufnahmen mit Hilfe automatischer Bildverarbeitungsverfahren ausgewertet, indem ein Vergleich mit früher aufgenommenen Bildern der gleichen Strecke durchgeführt wird. Nachteil dieser Lösung ist somit insbesondere, dass vor einer eigentlichen Messfahrt mindestens eine zusätzliche Messfahrt erforderlich ist, die einen Soll-Zustand der Oberleitung aufzeichnet. Ist zudem bereits dieser Soll-Zustand der Oberleitung mit Fehlern oder Beschädigungen behaftet, führt dies zu fehlerhaften Beurteilungen.

Es ist somit Aufgabe der Erfindung, ein Verfahren bereitzustellen, mit dem vollautomatisch und berührungslos Winkel und Abstände zwischen Strukturen eines Objektes gemessen werden.

Diese Aufgabe wird in Verbindung mit dem Oberbegriff des Hauptanspruches erfindungsgemäß durch die in Anspruch 1 angegebenen Merkmale gelöst.

Hierbei wird mit Hilfe mindestens eines ortsfesten oder beweglichen Sensors eine Abbildung des Objektes sowie seiner Umgebung aufgezeichnet, wobei
- nur Elemente mit einer vorgegebenen Form innerhalb der Abbildung des Objektes untersucht werden und/oder
- alle in horizontaler Richtung befindlichen Strukturen der Abbildung des Objektes, die im Vergleich zu dem zu vermessenden Objekt unter- und überdimensioniert sind, aus dem Bild entfernt werden und/oder
- alle Strukturen der Abbildung des Objektes, die eine Neigung aufweisen, die von der vorgegebenen Neigung des zu vermessenden Objektes abweicht, aus dem Bild entfernt werden.

Eine Entfernung eines ortsfesten oder beweglichen Sensors eines Messgerätes zu dem Objekt ist hierbei wesentlich größer als die Abmessungen des Objektes quer zur Blickrichtung des Sensors des Messgerätes. Dadurch wird gewährleistet, dass durch eine parallele bzw. quasi-parallele Messrichtung Winkel zwischen Strukturen des Objektes nahezu unverzerrt dargestellt werden.

Vorteil des erfindungsgemäßen Verfahrens ist zudem, dass die Winkelmessung prinzipiell ohne die Messung des Abstandes von dem zu vermessenden Objekt zum Sensorsystem erfolgen kann. Folglich genügt eine Aufnahme einer Kamera, um den Winkel zu bestimmen. Somit erspart dieses Verfahren eine zeitaufwendige und/oder rechenintensive Entfernungsmessung zum Objekt über Triangulation und dafür häufig verwendete Korrelationsverfahren.

Ein weiterer Vorteil ist, dass mit Hilfe einer zweiten Kameraaufnahme die Entfernung des Messgerätes zu dem zu vermessenden Objekt insbesondere über Triangulation bestimmt werden kann. Damit kann eine Fehlerkorrektur für erfindungsgemäß ermittelte Winkel bei einem Verhältnis von Entfernung des Messgerätes zum Objekt zur Abmessungen des Objektes quer zur Blickrichtung des Sensors des Messgerätes kleiner als 4 zu 1 durchgeführt werden. Die zweite Kameraaufnahme kann vorteilhaft durch eine zweite Kamera oder durch einen örtlichen Versatz zwischen zwei Aufnahmen einer Kamera erfolgen.

Ansprüche 2 bis 8 beinhalten vorteilhafte Ausführungsbeispiele der erfindungsgemäßen Lösung aus Anspruch 1.

Die Erfindung wird nachstehend anhand eines Ausführungsbeispiels und einer Zeichnung mit zwei Figuren näher erläutert. Die Zeichnung zeigt in
- **Fig. 1**: schematisch ein Schienenfahrzeug mit Kamera zur Inspektion von Fahrleitungsstützpunkten einer Oberleitung,
- **Fig. 2**: schematisch Details eines zu untersuchenden Fahrleitungsstützpunktes aus Fig. 1 sowie der Kamera zur Inspektion.

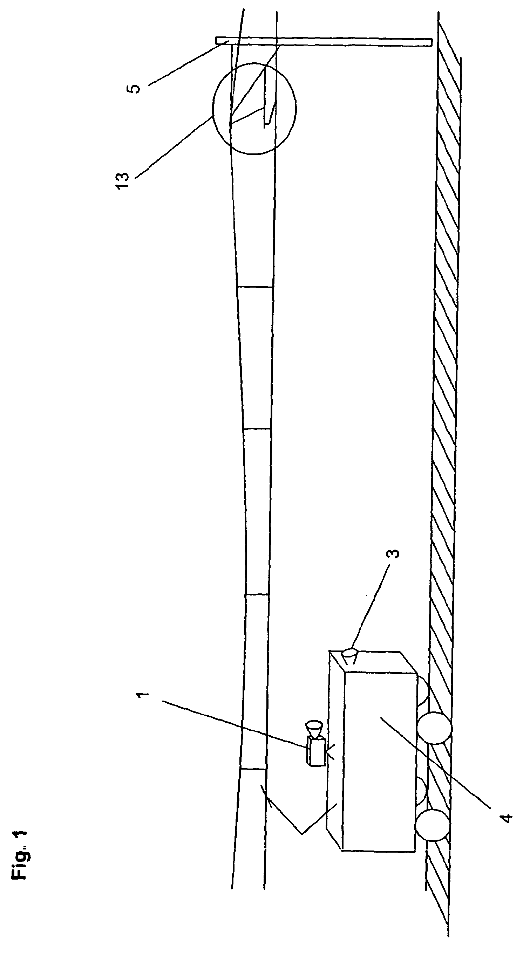

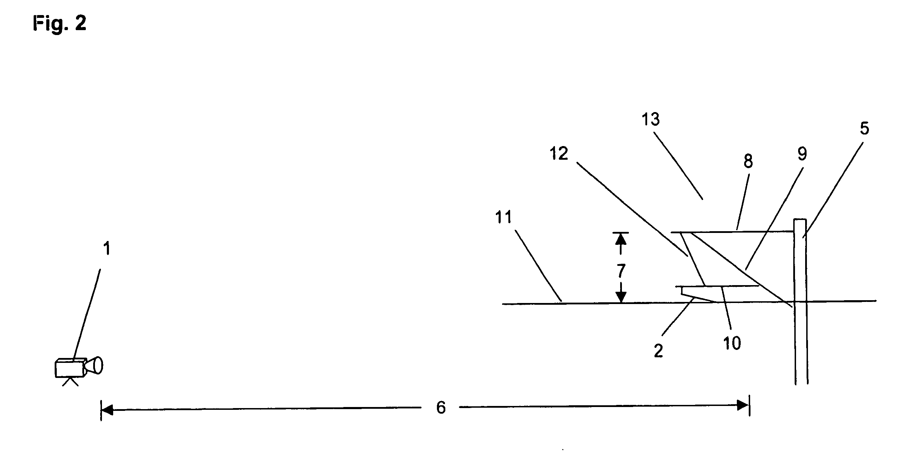

Im Ausführungsbeispiel ist, wie in **Fig.** 1 dargestellt, eine Kamera 1 als Sensor einer Messvorrichtung an einem Schienenfahrzeug 4 angebracht, wobei als Objekt ein Fahrleitungsstützpunkt 13 an einem Oberleitungsmast 5 einer Oberleitung vermessen wird. Strukturen innerhalb des Fahrleitungsstützpunktes 13, deren Winkel und/oder Abstände untereinander vermessen werden sollen sowie ggf. deren Abstand von der Kamera 1 bestimmt werden soll sind nach **Fig. 2** hierbei insbesondere ein Seitenhalter 2, ein Spitzenanker 8, ein Auslegerrohr 9 sowie ein Stützrohr 10.

Die Kamera 1 befindet sich nach **Fig. 2** in einem Abstand 6 von dem zu vermessenden Seitenhalter 2.

Für den Abstand 6, der wesentlich größer ist als eine Höhe 7 des Fahrleitungsstützpunktes 13, ist eine Blickrichtung der Kamera 1 nahezu senkrecht auf den Fahrleitungsstützpunkt 13, so dass Winkel zwischen Strukturen des Fahrleitungsstützpunktes 13 nahezu unverzerrt wiedergegeben werden. Dies ist insbesondere dann der Fall, wenn der Abstand 6 der Kamera viermal so groß gewählt wird wie die Höhe 7 des Fahrleitungsstützpunktes 13 quer zur Blickrichtung der Kamera 1. Beträgt zum Beispiel die Einbauhöhe der Kamera 2,5 m und die Fahrdrahthöhe 5,7 m gegenüber Schienenoberkannte, so errechnet sich für einen typischen vertikalen Abstand zwischen Seitenhalter und Stützrohr von 0,3 m die minimale Entfernung z von Kamera zu Seitenhalter zu z = (5,7 m - 2,5 m + 0,3 m)*4 = 14 m.

Ein Bild, das die Kamera 1 von dem Fahrleitungsstützpunkt 13 aufnimmt, besteht insbesondere aus dem Seitenhalter 2, einem Fahrdraht 11, dem Spitzenanker 8, dem Auslegerrohr 9, dem Stützrohr 10, einem Oberleitungsmast 5 sowie einem Halteseil 12 zwischen Spitzenanker 8 und Stützrohr 10.

In einem ersten Arbeitsschritt werden alle Elemente der Abbildung, die nicht einer vorgegebenen Form entsprechen aus der Abbildung entfernt. Dies sind im Ausführungsbeispiel insbesondere gekrümmte Strukturen wie Erdungs- oder Kontaktschleifen, die nicht der geradlinigen Struktur z.B. des Seitenhalters 2 oder des Auslegerrohrs 9 entsprechen. Hierdurch wird gewährleistet, dass nur Winkel zwischen relevanten Strukturen ermittelt werden.

In einem zweiten Arbeitsschritt werden Strukturen, deren Abmessungen nicht den zu vermessenden Strukturen entsprechen, aus der Abbildung entfernt. Dies ist insbesondere der Fahrdraht 11 und das Halteseil 12, deren Durchmesser von ca. 1 cm geringer ausfällt als der Durchmesser der Rohre z.B. des Spitzenankers 8 oder des Auslegerrohrs 9 mit jeweils einem Durchmesser von mindestens ca. 2,5 cm.

In einem weiteren Arbeitsschritt werden alle Strukturen der Abbildung des Objektes aus dem Bild entfernt, die eine Neigung aufweisen, die von der Neigung des zu vermessenden Objektes abweicht. Strukturen innerhalb eines Fahrleitungsstützpunktes, deren Winkel und Abstände untereinander und deren Abstand von der Kamera ermittelt werden sollen, weisen üblicherweise einen Winkel von maximal 45° zur Horizontalen auf. Durch diesen Arbeitsschritt wird somit gewährleistet, dass Strukturen, die einen größeren Winkel aufweisen, insbesondere der Oberleitungsmast 5, von einer weiteren Analyse der Abbildung ausgeschlossen werden.

Die Reihenfolge der oben angegebenen Arbeitsschritte des erfindungsgemäßen Verfahrens ist hierbei nicht erfindungswesentlich und rein willkürlich gewählt worden und kann im besonderen Anwendungsfall verändert werden.

Die Ermittlung der Winkel und der Abstände erfolgt mit Hilfe üblicher Verfahren der Messtechnik. Die Winkel werden vorzugsweise mit Hilfe gängiger Verfahren der sog. geometrischen Momentbestimmung ermittelt. Die Abstände werden vorzugsweise mit Hilfe von Triangulationsverfahren ermittelt.

Zur Erkennung und Vermessung von Strukturen des Fahrleitungsstützpunktes 13 wird zunächst das Bild in Vorder- von Hintergrund segmentiert. Dafür genügt in den meisten Fällen ein dynamischer Schwellwert, da der Hintergrund, der weitestgehend aus Himmel besteht, meist deutlich heller ist als die Strukturen des Fahrleitungsstützpunktes 13. Da die resultierenden Segmente des Bildes über die Strukturen des Fahrleitungsstützpunktes 13 hinaus auch andere Vordergrundobjekte, wie z.B. Fahrdraht 11, Tragseil oder Hänger enhalten, muss eine Trennung der Segmente des Fahrleitungsstützpunktes 13 von den anderen Segmenten erfolgen. Dazu kann ausgenutzt werden, dass Segmente des Fahrleitungsstützpunktes 13 meist um mindestens Faktor 2 breiter sind als andere Vordergrundobjekte, wodurch eine Trennung durch sog. morphologische Operatoren, insbesondere durch "openening", erfolgen kann.

Weitere Segmente des Vordergrunds, die zu den interessierenden Stützpunktobjekten gehören, können durch Nachbarschaftbeziehungen und Orientierung herausgefiltert werden. Die Orientierung eines Segments gegenüber der Horizontalen kann dabei über gängige Verfahren der sog. geometrischen Momentbestimmung berechnet werden. Für die Messung eines Winkels zwischen Strukturen des Fahrleitungsstützpunktes 13 dürfen nur gerade Elemente berücksichtigt werden. Rundungen zu den Enden oder breite Befestigungspunkte verfälschen das Ergebnis der Winkelmessung. Um Rundungen und Enden oder breite Befestigungspunkte zu entfernen werden die Segmente des Objektes mit Hilfe von bekannten Bildbearbeitungsverfahren skeletiert und die längste durchgehende gerade Linie gesucht.

Eine Zuordnung der Position des zu vermessenden Objektes zu dessen geographischer Position wird mit Hilfe einer Positions-Ortungsanlage durchgeführt. Dies sind insbesondere Weg-Messeinrichtungen oder GPS-Geräte. Hierdurch wird gewährleistet, dass für eine eventuell erforderliche Reparatur eines Fahrleitungsstützpunktes dieser eindeutig identifiziert und an einer Strecke aufgefunden werden kann.

Für Messungen, die in der Nacht durchgeführt werden sollen, ist am Schienenfahrzeug 4 eine Beleuchtung 3 der Oberleitung und des Fahrleitungsstützpunktes 13 vorgesehen. Somit können Messfahrten zur Inspektion der Fahrleitungsstützpunkt 13 auch in der Nacht und somit in einem Zeitraum durchgeführt werden, der durch Zugfahrten für Personen- oder Güterverkehr geringer belegt ist.

### Bezugszeichenliste

- 1: Kamera
- 2: Seitenhalter
- 3: Beleuchtung
- 4: Schienenfahrzeug
- 5: Oberleitungsmast
- 6: Abstand Kamera 1 zu Seitenhalter 2
- 7: Höhe des Seitenhalters 2
- 8: Spitzenanker
- 9: Auslegerrohr
- 10: Stützrohr
- 11: Fahrdraht
- 12: Halteseil
- 13: Fahrleitungsstützpunkt

## Patentansprüche

1. Verfahren zur berührungslosen Messung von Winkeln und/oder Abständen zwischen Strukturen eines Objektes, wobei eine Entfernung eines ortsfesten oder beweglichen Sensors eines Messgerätes zu dem Objekt wesentlich größer als die Abmessungen des Objektes quer zur Blickrichtung des Sensors des Messgerätes ist, wobei
mit Hilfe mindestens eines ortsfesten oder beweglichen Sensors eine Abbildung des Objektes sowie seiner Umgebung aufgezeichnet wird und **dadurch gekennzeichnet, dass**
• nur Elemente mit einer vorgegebenen Form innerhalb der Abbildung des Objektes untersucht werden und/oder
• alle in einer vorgegebenen Richtung befindlichen Strukturen der Abbildung des Objektes, die im Vergleich zu dem zu vermessenden Objekt unter- oder überdimensioniert sind, aus dem Bild entfernt werden und/oder
• alle Strukturen der Abbildung des Objektes, die eine Neigung aufweisen, die von der Neigung des zu vermessenden Objektes abweicht, aus dem Bild entfernt werden.

2. Verfahren zur Winkel- und Abstandsmessung nach Anspruch 1, **dadurch gekennzeichnet, dass** mindestens ein Sensor an und/oder in einem Schienenfahrzeug (4) angebracht wird.

3. Verfahren zur Winkel- und Abstandsmessung nach einem oder mehreren der Ansprüche 1 bis 2, **dadurch gekennzeichnet, dass** Winkel von Fahrleitungsstützpunkten (13) einer Oberleitung von Schienenbahnen sowie ein Abstand (6) des Messgerätes zu diesen Fahrleitungsstützpunkten (13) gemessen werden.

4. Verfahren zur Winkel- und Abstandsmessung nach einem oder mehreren der Ansprüche 1 bis 3, **dadurch gekennzeichnet, dass** als vorgegebene Richtung eine horizontale Richtung gewählt wird.

5. Verfahren zur Winkel- und Abstandsmessung nach einem oder mehreren der Ansprüche 1 bis 4, **dadurch gekennzeichnet, dass** das Verhältnis zwischen der Entfernung des Messgerätes zum Objekt zur Abmessungen des Objektes quer zur Blickrichtung des Sensors des Messgerätes größer als 4 zu 1 gewählt wird.

6. Verfahren zur Winkel- und Abstandsmessung nach einem oder mehreren der Ansprüche 1 bis 5, **dadurch gekennzeichnet, dass** alle in horizontaler Richtung befindlichen Strukturen der Abbildung des Objektes, die die Abmessungen des Objekt um mindestens den Faktor 2 übersteigen, aus dem Bild entfernt werden.

7. Verfahren zur Winkel- und Abstandsmessung nach einem oder mehreren der Ansprüche 1 bis 6, **dadurch gekennzeichnet, dass** alle Strukturen der Abbildung des Objektes, die eine Neigung von mindestens 45° zur Horizontalen aufweisen aus dem Bild entfernt werden.

8. Verfahren zur Winkel- und Abstandsmessung nach einem oder mehreren der Ansprüche 1 bis 7, **dadurch gekennzeichnet, dass** nur lineare Elemente der Abbildung des Objektes untersucht werden.

9. Verfahren zur Winkel- und Abstandsmessung nach einem oder mehreren der Ansprüche 1 bis 8, **dadurch gekennzeichnet, dass** bei dunkler Umgebung eine Beleuchtung des Objektes durchgeführt wird.

10. Verfahren zur Winkel- und Abstandsmessung nach einem oder mehreren der Ansprüche 1 bis 9, **dadurch gekennzeichnet, dass** eine Zuordnung der Position des Objektes zu dessen geographischer Position mit Hilfe einer Positions-Ortungsanlage durchgeführt wird.

## Claims

1. A method for the contactless measurement of angles and/or distances between structures of an object, wherein a distance of a geographically fixed or moveable sensor of a measuring device to the object is substantially greater than the dimensions of the object across the viewing direction of the sensor of the measuring device, wherein with the help of at least one geographically fixed or moveable sensor an image of the object as well as its surroundings is recorded and **characterized in that**
- only elements with a predetermined shape are examined within the image of the object and/or
- all structures of the image of the object located in a predetermined direction which compared with the object to be measured are under or over-dimensioned are removed from the image and/or
- all structures of the image of the object which have an inclination that deviates from the inclination of the object to be measured, are removed from the image.

2. The method for angle and distance measurement according to Claim 1, **characterized in that** at least one sensor is fastened to and/or in a rail vehicle (4).

3. The method for angle and distance measurement according one or several of the Claims 1 to 2, **characterized in that** angles of catenary support points (13) of an overhead line of railways as well as a distance (6) of the measuring device to these catenary support points (13) are measured.

4. The method for angle and distance measurement according to any one or several of the Claims 1 to 3, **characterized in that** as predetermined direction a horizontal direction is selected.

5. The method for angle and distance measurement according to any one or several of the Claims 1 to 4, **characterized in that** the ratio between the distance of the measuring device to the object to the dimensions of the object across the viewing direction of the sensor of the measuring device is selected greater than 4 to 1.

6. The method for angle and distance measurement according to any one or several of the Claims 1 to 5, **characterized in that** all structures of the image of the object located in horizontal direction which exceed the dimensions of the object by at least the factor 2 are removed from the image.

7. The method for angle and distance measurement according to any one or several of the Claims 1 to 6, **characterized in that** all structures of the image of the object having an inclination of at least 45° to the horizontal are removed from the image.

8. The method for angle and distance measurement according to any one or several of the Claims 1 to 7, **characterized in that** only linear elements of the image of the object are examined.

9. The method for the angle and distance measurement according to any one or several of the Claims 1 to 8, **characterized in that** in dark surroundings lighting of the object is carried out.

10. The method for the angle and distance measurement according to any one or several of the Claims 1 to 9, **characterized in that** allocation of the position of the object to its geographic position is carried out with the help of a position finding system.

## Revendications

1. Procédé de mesure sans contact d'angles et/ou de distances entre des structures d'un objet, un éloignement d'un capteur fixe ou mobile d'un appareil de mesure par rapport à l'objet étant sensiblement supérieur aux dimensions de l'objet transversalement au sens d'observation du capteur de l'appareil de mesure, dans lequel,
à l'aide d'au moins un capteur fixe ou mobile, une représentation de l'objet ainsi que de son environnement est enregistrée et **caractérisé en ce que**
• seuls des éléments ayant une forme prédéterminée sont examinés au sein de la reproduction de l'objet et/ou
• toutes les structures se trouvant dans un sens prédéterminé de la représentation de l'objet qui sont sous- ou surdimensionnées comparativement à l'objet à mesurer sont enlevées de l'image et/ou
• toutes les structures de la représentation de l'objet présentant une inclinaison qui diffère de l'inclinaison de l'objet à mesurer sont enlevées de l'image.

2. Procédé de mesure d'angle et de distance selon la revendication 1, **caractérisé en ce que** l'au moins un capteur est installé sur et/ou dans un véhicule ferroviaire (4).

3. Procédé de mesure d'angle et de distance selon une ou plusieurs des revendications 1 à 2, **caractérisé en ce que** les angles de points d'appui de la caténaire (13) d'une ligne de contact aérien de voies ferroviaires ainsi qu'une distance (6) entre l'appareil de mesure et ces angles de points d'appui de la caténaire (13) sont mesurés.

4. Procédé de mesure d'angle et de distance selon une ou plusieurs des revendications 1 à 3, **caractérisé en ce qu'**on choisit comme sens prédéterminé un sens horizontal.

5. Procédé de mesure d'angle et de distance selon une ou plusieurs des revendications 1 à 4, **caractérisé en ce que** le rapport entre l'éloignement de l'appareil de mesure par rapport à l'objet et les dimensions de l'objet transversalement au sens d'observation du capteur de l'appareil de mesure est établi à un niveau de plus de 4 à 1.

6. Procédé de mesure d'angle et de distance selon une ou plusieurs des revendications 1 à 5, **caractérisé en ce que** toutes les structures se trouvant dans le sens horizontal de la représentation de l'objet qui excèdent d'au moins le facteur 2 les dimensions de l'objet sont enlevées de l'image.

7. Procédé de mesure d'angle et de distance selon une ou plusieurs des revendications 1 à 6, **caractérisé en ce que** toutes les structures de la représentation de l'objet qui présentent une inclinaison d'au moins 45° par rapport à l'horizontale sont enlevées de l'image.

8. Procédé de mesure d'angle et de distance selon une ou plusieurs des revendications 1 à 7, **caractérisé en ce que** seuls les éléments linéaires de la représentation de l'objet sont examinés.

9. Procédé de mesure d'angle et de distance selon une ou plusieurs des revendications 1 à 8, **caractérisé en ce que**, dans un environnement sombre, on procède à un éclairage de l'objet.

10. Procédé de mesure d'angle et de distance selon une ou plusieurs des revendications 1 à 9, **caractérisé en ce qu'**une association de la position de l'objet à sa position géographique est réalisée à l'aide d'une installation de localisation de position.
